(19) Europäisches Patentamt
European Patent Office
Office européen des brevets

(11) **EP 2 390 793 B1**

(12) **EUROPEAN PATENT SPECIFICATION**

(45) Date of publication and mention
of the grant of the patent:
**10.07.2013 Bulletin 2013/28**

(51) Int Cl.:
*G06F 17/22* *(2006.01)*

(21) Application number: **10005512.8**

(22) Date of filing: **27.05.2010**

(54) **Method for determining similarity of text portions**

Verfahren zur Bestimmung der Ähnlichkeit von Textabschnitten

Procédé pour déterminer la similitude de portions de texte

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**30.11.2011 Bulletin 2011/48**

(73) Proprietor: **Códice Software S.L
Parque Tecnológico de Boecillo
47151 Boecillo Valladolid (ES)**

(72) Inventors:
• **Ruiz, Arroyo, Borja
47151 Boecillo, Valladolid (ES)**
• **Santos Luaces, Pablo
47151 Boecillo, Valladolid (ES)**

(74) Representative: **Grünecker, Kinkeldey,
Stockmair & Schwanhäusser
Leopoldstrasse 4
80802 München (DE)**

(56) References cited:
**US-A1- 2009 089 754**

• **McCowan I et al: "On the Use of Information
Retrieval Measures for Speech Recognition
Evalutation" IDIAP Research Reportno. IDIAP-RR
04-73, 1 March 2005 (2005-03-01), XP002593934
Martigny, CH Retrieved from the Internet: URL:
http://www.idiap.ch/ftp/reports/2004/r r04-73.pdf
[retrieved on 2010-07-20]**
• **AGICHTEIN E ET AL: "Combining Lexical,
Syntactic, and Semantic Evidence for Textual
Entailment Classification" PROCEEDINGS OF
THE FIRST TEXT ANALYSIS CONFERENCE (TAC
2008) NOVEMBER 17-19, 2008, NATIONAL
INSTITUTE OF STANDARDS AND
TECHNOLOGY, GAITHERSBURG, MARYLAND,
USA,, 17 November 2008 (2008-11-17), pages 1-6,
XP002584288 [retrieved on 2010-05-26]**
• **TATAR D ET AL: "Textual Entailment as a
Directional Relation" Journal of Research and
Practice in Information Technology vol. 41, no. 1,
2 January 2010 (2010-01-02), pages 53-63,
XP002593545 AU Retrieved from the Internet:
URL:http://www.jrpit.acs.org.au/jrpit/JRPI
TVolumes/JRPIT41/JRPIT41.1.53.pdf [retrieved
on 2010-07-20]**

**Description**

The present invention provides a method for determining if a first text portion is to be considered as being included in a second text portion, wherein it may be included in an amended or unamended form. This method can be implemented in a tool supporting a user in merging different versions of an electronic base document.

The process of editing an electronic document usually includes composing various versions of the document. For instance, a document writer might, at a certain point, decide to restructure his present version while not wanting to definitely abandon it. Therefore, he might wish to retain the old version for possible later use. Consequently, both a newer and an older version of the electronic document would exist in parallel. As another example, various people might collaborate on a document edition, possibly each one modifying a base version of it, thus composing a respective own version of the electronic document. For example, each one of the composers might delete or add a portion of text from or to the base version, or might move a portion to another position in the document and so on. In particular, in the field of software engineering, concurrent and parallel development done by several contributors has become a core concept of producing software code.

In these cases, the various versions created are each represented in a respective electronic document. These documents might differ from each other in that text portions appearing in a first document do not appear in a second document, or appear in a modified formulation, or appear at another position in the second document than in the first one, possibly additionally in an amended formulation.

Merge operations are known to reconcile the respective documents and combine them into a single one. To this end, a difference analysis is performed. In a two-way merge, two versions of a file are compared with each other in order to generate a merge. In a three-way merge, a common origin file of two versions is further considered.

In some cases, such a merge operation can be performed automatically. However, there are many cases where manual intervention is required. In particular, scenarios when text in a first document is both modified and moved as compared to a second version, usually end up in a manual merge operation. For instance, such situations appear frequently when software refactoring is used, which focuses on modifying existing code to enhance readability and hence maintainability, without changing the external application behaviour.

In order to identify such moved text that might not even be completely identical to its counterpart in another document, an assessment of similarity between text portions has to be made. It is an object of the present invention to provide a method for determining if a first text portion is to be considered as included in a second text portion, wherein (if so) it may be included in an unamended or amended form. Another object of the invention is to improve automatical merge tools by implementing therein said method, in order to reduce the incidence of manual intervention being required, or to assist and guide a user in a manual merge process.

These objects are met with the method of claim 1 and the computer readable medium of claim 14. Preferred embodiments are disclosed in the dependent claims.

US 2009/0089754 (ZEIDMAN) 2 april 2009 describes a method for comparing two documents in order to identifyin software plagiarism.

The method of claim 1 determines whether or not a first text portion is to be considered as included in a second text portion, wherein it may be included in an unamended or an amended or otherwise different form, and wherein the text portions are electronically coded and structured to have a respective number of one or more lines. The number may be predetermined.

In this document, a first text portion being "included" in a second text portion is meant to embrace the meaning that the first text portion is actually all of the second text portion. Moreover, the term "similarity" (and its derivatives) is to be understood as including the meaning of equality (or its derivatives). That is, any two cloned entities are also named herein as similar.

According to the method of claim 1, a line $L_i$ in the first text portion and a line $Z_j$ in the second text portion are selected, wherein the line $L_i$ and the line $Z_j$ both include at least one word. In a particular example, the line $L_i$ may include multiple words such as two, three or more words. Additionally or alternatively, the line $Z_j$ may include two, three or more words.

In this document, a word is defined to be one or more consecutive characters in a computer typed text, which are between two consecutive characters of a predetermined set of one or more particular characters, or which are between a beginning of a line and the first one of the particular character(s) in the line, or between the last one of the particular character(s) in a line and the line end or, if no particular character appears in the line, between the line's beginning and its end. The particular character(s) (which are to be used as word separation character(s)) do not form part of the word or words. For instance, if the set of particular characters were defined to consist of the characters ä, ü and ñ, then the typed text line "hereäareñtheüwordsä!" would consist of the words "here", "are", "the", "words" and "!".

The set of such particular characters may include the space character and/or punctuation marks such as comma, dot, semicolon, colon, exclamation mark and so on. Additionally or alternatively, the set of characters may include different types of brackets and/or quote signs and or equality signs and/or inequality signs, for instance. The method may include the step of receiving a selection of the set of particular characters. In a preferred embodiment, the set of characters consists only of the space character " ".

The notation of "two" (or more) words means that the respective strings appear as different representations of text, such as in two electronic documents (e.g., saved at different locations or at different positions in an electronic document). It is not intended to mean that the words as such have a different appearance or meaning. A comparison of words and the determining if they are equal is always meant to be made pairwise. That is, if a word w is compared to various words $w_1,..., w_t$, then for each j=1,...,t it is determined whether or not w is equal to $w_j$.

As mentioned above, the text portions are considered to include a fixed segmentation of the included text into entities. These entities are considered to be lines. The lines of the text portions, i.e., the segmentation of each of the text portions into lines, may be independent of respective representations of the text portions on one or more display(s). For instance, the lines may be defined in a respective internal coding of the text portions. Lines may be separated by a carriage return character. However, other partitions than those by lines are conceivable, such as, for instance, segments defined by the number of words they include.

The method may include the step of receiving a selection of the first and second text portions, and/or of a predetermined algorithm that is to be used.

The step of selecting lines $L_i$ and $Z_j$. may include a step of searching for one or more particular character(s) or word(s) included in the lines of the first and/or second text portion. If such a character or word (such characters or words, respectively) is found (or not found), another line $L_i$ or $Z_j$, respectively, or other lines $L_i$ and $Z_j$ may be chosen to be selected. For example, if the text portions both include software source code, the step of selecting lines $L_i$ and $Z_j$ may comprise the step of checking whether or not the first (and possibly also the second, third and/or fourth) character(s) or word(s) of the line $L_i$ and/or $Z_j$. are included in a predetermined set of one or more exception characters or words, such as characters indicating a comment not to be interpreted by a compiler. If so, another line $L_i$ or $Z_j$, respectively, or other lines $L_i$ and $Z_j$ may be selected. In this manner, when determining whether or not the first text portion is included in the second text portion, comments in a first and/or second text portion may be disregarded. The method may include the step of receiving a selection of the set of exception characters (or words).

Alternatively, all lines in the first and/or second text portion may be considered the same way, e.g. disregarding whether they include source code or one or more comments.

According to the present disclosure, a method involves applying a predetermined algorithm to the tuple of selected lines $L_i$ and $Z_j$. The algorithm compares each word in the line $L_i$ with one or some or each word(s) in the line $Z_j$ and determines, in each case, if the respectively pairwise compared words are both equal. By utilising the result of this determination of equality, the algorithm calculates at least one result value (i.e., one or more result values).

As an example, an algorithm for calculating a Levenshtein distance may be modified as follows. Conventionally, the Levenshtein distance between a first and a second string is defined to be the minimum number of edits necessary to convert the first string into the other, wherein the allowable edit operations are insertion, deletion and substitution of a single character. A Levenshtein algorithm calculates this number, e.g., as is well-known, by computing records of an appropriate matrix, wherein the most right entry in the last line of the matrix then results to be said distance. A conventional Levenshtein algorithm is based on a character search to compare text portions. Every single character in a first text portion is compared to each of the characters in a second text portion in order to find matches.

For practical purposes, when the considered text portions usually comprise more than a few characters only, the implementation of this algorithm is extremely slow. According to an aspect of the present invention, the concept of the algorithm is, therefore, modified in that it compares lines and operates on a word basis. That is, two lines of text are scanned by comparing the words respectively included in the lines.

To be more precise, a modified Levenshtein algorithm applied to the lines $L_i$ and $Z_j$ may calculate the minimum number of subsumed word insertions, deletions and substitutions in $L_i$ necessary to form the line $Z_j$. This number can be considered as the Levenshtein distance $d_{ij}$ between the lines $L_i$ and $Z_j$ with regard to the included words, and it may then be used as a particular result value calculated by the algorithm, to determine if a first text portion is included in a second text portion, wherein the first text portion may be amended or unamended.

Other algorithms are conceivable, such as those which simply operate on the basis of determining the ratio of the number of words of the first line that are found to appear in the second line, compared to (e.g., divided by) the total number of words in the first line, for example.

According to the present disclosure, the at least one result value calculated by the predetermined algorithm is utilised to determine whether or not the first text portion is to be considered as included in an amended or unamended form, in the second text portion. For example, the algorithm may be applied to one or more further tuple(s) of lines respectively included in the first and second text portion, to calculate at least one supplementary result value. A function may then be applied to all the result value(s) and supplementary result value(s), and the determination of whether or not the first text portion is to be considered as included in the second text portion may be made by comparing the outcome of the function to a threshold value.

As a particular example, the above mentioned modified Levenshtein algorithm may be applied to all tu-

ples ($L_p$, $Z_k$) of lines $L_p$ in the first text portion and $Z_k$ in the second text portion, or to an appropriate selection of all these tuples. All of the resulting Levenshtein distances of the considered pairs of lines may be added, and it may be determined that the first text portion is to be considered as being included, in an amended or unamended form, in the second text portion, if and only if the resulting sum does not exceed a predetermined threshold value. Alternatively, the respective Levenshtein distances may be normed or weighted before adding them up, such as by dividing them by the respective number of words included in the respectively considered line in the first or second text portion, or by the number of words included in any one of both considered lines (i.e., in both considered lines together). Additionally or alternatively, said sum of Levenshtein distances (each possibly further normed or weighted, as mentioned) may be divided by the total number of line tuples considered. In this manner, the threshold may be chosen to be independent of the particular text portions.

Therefore, the present invention relies on a comparison of words, to determine whether or not two words are equal. Even though this determination itself may be made on a character basis, the determination of similarity of two text portions is then made by considering entire words. Thus, any similarities within different words are ignored. This improves the speed of the implementation as compared to a conventional character based technique. On the other hand, it allows for a broad applicability, as no restriction is made to a specific code or natural language; in contrast, known language parsing relies on a specific parser disposing of a particular vocabulary and supporting a respective language only.

A particular embodiment of the present invention further involves determining if the lines $L_i$ and $Z_j$ to which a predetermined algorithm is applied, are to be considered as similar. This determination is preferably based on a comparison of the at least one result value, calculated by the algorithm when being applied to the tuple $L_i$ and $Z_j$, with at least one given threshold value. For example, it may be determined that these lines are similar if and only if the at least one result value is smaller than the at least one threshold value, or if and only if it is larger than the at least one threshold value. In a particular embodiment, the method further includes the step of receiving a selection of the one or more threshold value (s). The threshold values(s) may depend on the lines considered, such as on the line $L_i$. For instance, it may be determined that a line $L_i$ includes a character or word indicating a method call. As a consequence, the threshold may be chosen to reflect a high importance of the line, so as to increase the requirements to be fulfilled by a line $Z_j$ in order that it is considered to be similar to the line $L_i$.

Preferably, the predetermined algorithm is such that lines are determined to be similar if (but preferably not only if) they are equal.

For instance, the method may comprise relating the modified Levenshtein distance $d_{ij}$ of the lines $L_i$ and $Z_j$ to the number $k_i$ of words in the line $L_i$, such as by calculating the ratio $r_{ij} := \dfrac{d_{ij}}{k_i}$.

If the ratio does not exceed a predetermined value, one might decide that the lines $L_i$ and $Z_j$ are to be considered as similar, and one might continue to compare another pair of lines of the first and second text portion, respectively, if existent, by applying the algorithm to this other tuple of lines.

The consideration of a determined similarity or dissimilarity (as the converse of similarity) of entire lines may simplify the determination of whether or not the first text portion is to be considered as included, in an amended or unamended form, in the second text portion, as this latter determination then can be made by considering binary values "similar" and/or "not similar". Moreover, by considering line (dis)similarity, the structure of the text portions is incorporated into the determination of whether or not the first text portion is to be considered as included, in the second text portion.

The outcome of a determination of whether or not the lines $L_i$ and $Z_j$ in the first and second text portion, respectively, are to be considered as similar, may be that the lines $L_i$ and $Z_j$ are *not* to be considered as similar. A line $Z_k$ different to the line $Z_j$ may then be selected in the second text portion, the line $Z_k$ including at least one word, and the predetermined algorithm comparing each word in the line $L_i$ with each word in the line $Z_k$ may then be applied to the tuple ($L_i$, $Z_k$) consisting of the line $L_i$ and the line $Z_k$, to calculate, based on the outcome of the said comparison, at least one further result value. The step of determining whether or not the first text portion is to be considered as included in the second text portion, may then be based also on this at least one further result value. For example, the latter determination may include the step of determining, based on the at least one further result value, if the lines $L_i$ and $Z_k$ are to be considered as similar, for instance by comparing the at least one further result value to a threshold value. This threshold value may be the same value as a threshold value used for determining if the lines $L_i$ and $Z_j$ are to be considered as similar, or it may be another threshold value. In a particular example, one or both of the lines $Z_k$ and $Z_j$ includes two or more words.

Thereby, the second text portion may be browsed to find a line that is to be considered as similar to the line $L_i$. This may allow for a determination concerning the inclusion of the first text portion (in an amended or unamended form) in the second one that is more reasonable or that better corresponds to a common interpretation what "included" means.

Alternatively, a determination of whether or not the lines $L_i$ and $Z_j$ in the first and second text portion, respectively, are to be considered as similar may be made, wherein the determination yields that these lines are *indeed* to be considered as similar. In an exemplary embodiment, the method then includes selecting, in the first text portion, a line $L_p$ different from the line $L_i$ and likewise including at least one word, and it may further comprise selecting, in the second text portion, a line $Z_k$ different to the line $Z_j$ and including at least one word. The method may further include the step of applying the predetermined algorithm to the tuple consisting of the lines $L_p$ and $Z_k$, the algorithm comparing each word in the line $L_p$ with each word in the line $Z_k$ to calculate at least one additional result value. Analogously to the above, the at least one additional result value may be utilised in the step of determining whether or not the first text portion is to be considered as included in the second text portion. For example, the latter determination may include the step of determining, based on the at least one additional result value, whether or not the lines $L_p$ and $Z_k$ are to be considered as similar, e.g., by comparing the at least one additional result value to a threshold value. This threshold value may be the same value as a threshold value used for determining that the lines $L_i$ and $Z_j$ are to be considered as similar, or it may be a different one. In a particular embodiment of the present invention, at least one of the lines $L_i$ and $L_p$ include(s) two or more words.

According to this method, various pairs of lines respectively included in the first and second text portions may be found which are to be considered as similar to each other. The consideration of line-related similarity allows for applying an indication of lines which are to be considered as similar, such as by highlighting them in respective representations of electronic documents including the text portions. This may be particularly useful for a user, e.g. a user searching for moved text portions.

A particular method includes the step of determining the number S of those lines L in the first text portion for which a line Z can be found in the second text portion, such that the line L is to be considered as similar to the line Z. The determination of whether or not the first and second text portions are to be considered as similar may then be made based on the ratio r of that number divided by the total number n of lines in the first text portion, i.e.

by considering $r := \dfrac{S}{n}$ for instance. Alternatively, said ratio may be defined by $r := \dfrac{S}{m}$, or by $r := \dfrac{S}{n+m}$,

wherein m is the total line number of the second text portion. Other definitions are well possible. The ratio may be compared to a threshold value. In a preferred embodiment, the method includes the step of receiving a selection of this threshold value. It may be determined that the first text portion is to be considered as included in the second text portion if and only if r is seen to be larger than the threshold value, for instance.

Consequently, the latter determining step may focus on considering the number of found line similarities.

Thus, differences between lines within the first text portion, the differences concerning the particular line lengths (or the number of words included) may be evened out. Thereby, the structure of the text portions may be taken into account, by following the text formation. In particular, the arrangement of lines in software source code usually reflects a logical structure which to consider, in some way, can be advantageous when evaluating text portions, such as with regard to their similarity. For instance, one line may consist of a function call and another line of a loop definition. While the function call possibly is represented by one word only, the loop definition often includes various words. Nevertheless, the lines may be seen as having a related importance. The above manner of determining if the first region is to be considered as included in the second region may avoid overestimating the significance of the line including the loop definition.

In an exemplary embodiment, the second text portion may consist of one or more lines included in a third text portion. In a particular embodiment, it may be determined that the first text portion is *not* to be considered as included (in an unamended or amended form) in the second text portion. The method may then further comprise the step of selecting a new second text portion likewise comprising at least one line and included in the third text portion, and determining whether or not the first text portion is included in the new second text portion. This determination may be made by applying any one of the above or below described methods to the first and the new second text portion.

In this manner, by chaining up these steps, a subportion of the third text portion may be found that is indeed to be considered as similar to the first text portion. This method is, therefore, in particular useful when it is included in a process of searching code that has been moved in an edit operation.

In such a search, when the third text portion comprises more lines than the first text portion, it can be useful to apply a particular strategy for finding an appropriate subportion of the third text portion. To this end, a method may include designating a subportion of the third text portion to be the new second text portion, wherein the new second text portion has the same number of lines as, or more lines than the first text portion. For instance, new second text portions may be iteratively selected and considered until it is determined that the first text portion is included, in a considered new second text portion, or until all possible subportions (or all having a desired type) of the third text portion have been checked. Therein, the selecting may be such that, in a first cycle, any considered (new) second text portion has the same number of lines as the first text portion. When it is determined, for any such (new) second portion, that the first text portion is *not* to be considered as included therein, in a second (third, fourth and so on) cycle, one or more new second text portion(s) may be selected and considered which have one (two, three and so on) more line(s) than the first text portion.

Such a procedure may be termed as applying a "sliding window", and it may provide for finding a second text portion in which the first text portion in included (in an amended or unamended form), wherein the found second text portion is as small as possible, thus increasing the similarity.

In a particularly preferred embodiment, the first and second text portions are included in respectively modified versions of a common original electronic document, further referred to as the base document. For instance, the first text portion may be included in another version that results from a modification of an electronic document, the modification done by a first user. The second text portion may analogously be included in a version resulting from a modification of the same base document, the modification carried out by a second user. In particular, the electronic base document may include software source code.

The method may further include notifying a user about found similarities. That is, if it is determined that the first text portion is indeed to be considered as included in the second text portion, then a message may be sent or displayed to a user, the message indicating this fact. Alternatively or additionally, the first and/or second text portion may be at least partially highlighted or otherwise marked in a representation thereof on a screen or display. In a particular embodiment including the feature of determining line similarity as described above, an identification may be applied to pairs of those lines within the first and second text portion which have been determined to be similar to each other. Therein, applying an identification may include highlighting the lines in a representation on a screen, or sending or displaying a message informing a user about the similarity and the selected lines.

A well-known difference calculation algorithm may be applied to both versions of an electronic document, to identify differences. Thereby, the first and second text portions may be determined as difference regions.

The difference calculation algorithm may consider one of the versions as a source document and the other one as a destination document. It may then detect a text portion appearing in the source document but not appearing in the destination document at the corresponding position, or vice versa. Such text portions, further referred to herein as difference regions, are candidates for inspecting if a move operation has been carried out by one of the users, i.e. if the respective user has cut a portion from a certain position in a text and pasted it at another position in the text. In a preferred embodiment of the invention, text portions in the respective documents found by a difference calculation algorithm are designated to be the first and second text portion in order to determine if one of these text portions are to be considered as included in the other one.

A particular embodiment of the present invention is a method for detecting a code move operation in a editing or merging process involving modified versions A and B of a same base document. According to this method, a difference calculation algorithm is applied to the versions A and B, to determine at least one difference region in version A and at least one difference region in version B. A pair of difference regions in versions A and B is selected. A first one of the such chosen difference regions is considered as a first text portion and the other one as a second text portion when one of the above method is applied. Thereby, it is determined if the first one of the chosen difference regions is included, in an amended or unamended form, in the other one of the chosen difference regions.

Alternatively, a first one of the such chosen difference regions is considered as a first text portion and the other one as a third text portion, while a subportion of the third text portion is considered as the second text portion when applying one of the above methods. Thereby, the other one of the difference regions may be downsized, thus possibly improving the search for a text portion that has been moved during the edition of the respective version.

In an embodiment, the method may include determining the line numbers of each of the chosen difference regions, and the one of the difference region having less lines may be considered as the first text portion. This may improve the method. Indeed, if the first text portion has more lines than the second text portion, the number of lines in the first text portion that have no similar counterpart in the second text portion will be at least the difference of the number of lines included in the first text portion as compared to the number of lines included in the second text portion. Consequently, depending on the considered threshold, even before starting a comparison of line contents, the probability of region similarity may be seen to be small.

Alternatively, the method may include the step of determining, for a first one of the pair of chosen difference regions designated as the first text portion and the other one of said pair as the second text portion (respectively, the third text portion), that the first text portion is *not* to be considered as included, in an amended or unamended form, in the second text portion. The method may then include the further step of considering the same pair of chosen difference portions the other way round, i.e. applying one of the above methods to the first one of the chosen difference regions as the second (respectively, third) text portion and the other one of the pair of difference regions as the first text portion.

This embodiment may improve the probability of finding text portions that may have been moved in one version as compared to another version of an electronic document.

The method may include the step of determining that the line number of each difference region is larger than or at least equal to a given minimum line number. Thereby, too small difference regions may be excluded from the determination according to one of the above methods, which may avoid that many single assignments are wrongly identified.

Additionally or alternatively, the method may further include the step of choosing another pair of difference regions after considering one pair of difference regions, and applying one of the above method steps accordingly to the other pair. Thereby, two versions of a document may be browsed for possibly moved text portions.

Once such text portions are found, they may be highlighted or otherwise indicated to a user as detailed above. In a merging process, the appropriate steps may then be drawn. For example, in a manual merge, a user may check back the indicated regions only, to find out the details of corresponding version modifications, thus avoiding the frustrating and error prone task of inspecting the whole documents.

Particular embodiments are disclosed in the appended drawings.

Figure 1  shows two text portions including various lines and words

Figure 2  is a block diagram showing an exemplary process of determining if two lines are to be considered as similar

Figure 3  shows the structure of a process for determining if a first text portion is to be considered as being included in a second text portion

Figure 4  depicts the functionality of applying search windows (sliding windows)

Figure 5  depicts a process of choosing second text portions within a third text portion (sliding window)

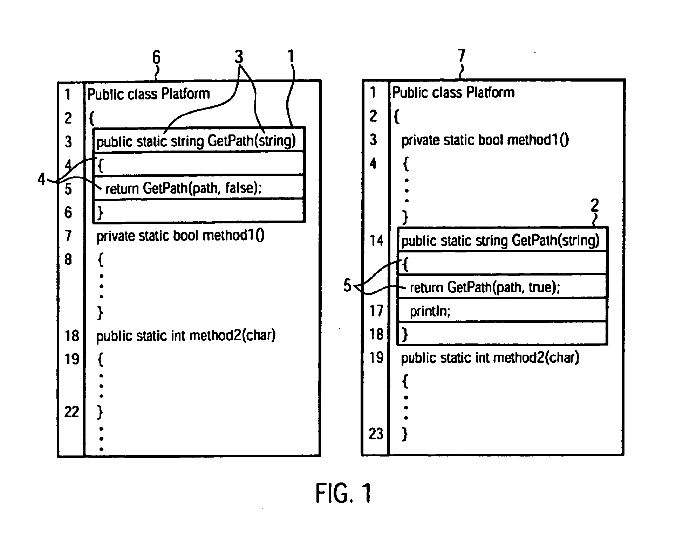

In Figure 1, two electronic documents 6, 7 each including some software source code are depicted. Text portions 1 and 2 have been chosen, as marked in the drawing by the respective boxes. In the exemplary situation shown, block 1 may be seen as the first text portion of the nomenclature of this document, while fragment 2 might be considered as the second text portion. The first text portion 1 then consists of four lines 4 and the second text portion of five lines 5. Both documents, and in particular the text portions each include various words 3, wherein in this case, the space character is assumed to be included in the set of particular characters which separate (and therewith, define) words as described above. The definition of a word depends on said predetermined set of particular characters. In the exemplary first text portion shown, it might be reasonable to designate also the parentheses "(" and ")" as elements, further to the space character, of that set of particular characters. If so, (and assuming that no further characters included have been defined to be included in that said set of particular characters) the expression "GetPath(string)" would be considered as the two words "GetPath" and "string". If that set includes the space character as its only element, the expression "GetPath(string)" would have to be interpreted as a single word.

As can be seen in Figure 1, the text portions 1 and 2 differ from each other in that the second text portion 2 includes a line comprising "println;" while the first text portion 1 does not. Moreover, the method call "GetPath" is applied to the value "false" in the first text portion and "true" in the second.

It depends on the precise setting of the predetermined algorithm if, in this case, the first text portion would be determined as to be indeed considered as included in the second text portion, in an amended form. This may be the case, for example, if a determination of line similarity is made as detailed above, and if a threshold would have been set such that the first text portion is to be considered as included in the second text portion if and only if the ratio of the number of lines (in the first text portion) having a similar counterpart in the second text portion, divided by the total line number of the first text portion, is at least ¾. Indeed, independent of whether or not the lines including the "return GetPath(...)"-call are considered as similar, three of four lines in the first text portion are equal to lines in the second text portion, and equal lines are reasonably considered as similar.

As can be further seen in Figure 1, the first and the second text portion appear at different positions in the respective documents 6 and 7. The text portions can, therefore, be considered as indicating a text move carried out in an amendment of the first electronic document 6, the amendment resulting in the second electronic document, the text move being accompanied by a slight text modification.

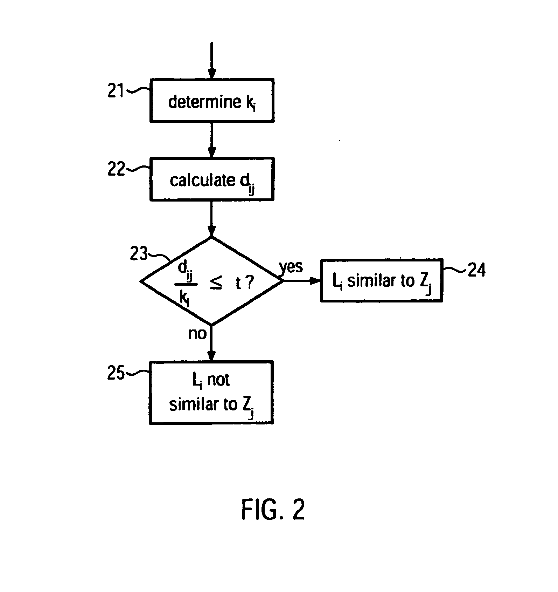

Figure 2 depicts a process of determining if two lines $L_i$ and $Z_j$ are to be considered as similar. The lines are assumed to be already selected when the process is started. In step 21, the number $k_i$ of words included in the line $L_i$ is determined. In step 22 (which is depicted as following step 21 but likewise may be carried out before), a modified Levenshtein distance $d_{ij}$ of the lines $L_i$ and $Z_j$ is determined with regard to words. The ratio $\dfrac{d_{ij}}{k_i}$ is compared, in step 23 to a predetermined threshed value t. If the ratio is not larger than the threshold value, then it is determined that lines $L_i$ and $Z_j$ are to be considered as similar (step 24), otherwise that they are not (step 25).

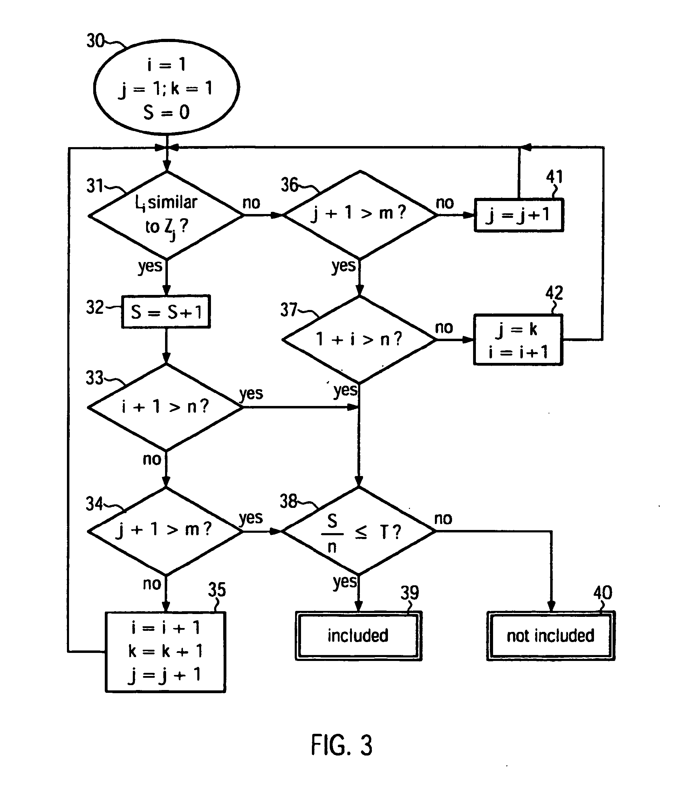

Figure 3 shows a possible procedure for determining if a first text portion is to be considered as included in a second text portion, wherein it may be included in an amended or unamended form. Therein, the first text portion is assumed to consist of the lines $L_1, L_2, ..., L_n$, (n being the line number of the first text portion). The second text portion is assumed to have the m lines $Z_1, Z_2, ..., Zm$.

The process starts with setting, in step 30, integers i, j, k and S to zero. During the process, the number S reflects the number of lines in the first text portion which are found to have a similar counterpart in the second text portion. The procedure then enters a loop at step 31, in which it is determined if $L_i$ and $Z_j$ are to be considered as similar. For instance, the procedure depicted in Figure 2 may be applied in step 31. If it is determined that $L_i$ and $Z_j$ are to be considered as similar, then the process proceeds to step 32, incrementing the similar lines counter S by one. Otherwise, the procedure continues by determining, in step 36, if the considered line $Z_j$ has been the last line of the second text portion, i.e., if j+1>m. If not, then j is incremented, in step 41, by one, and the process continues to step 31 to determine if the line $L_i$ is to be considered as similar to the next line in the second text portion (i.e. the line following the previously considered one).

If, however, in step 36 it is determined that $Z_j$ has been the last line, this means that the line $L_i$ has already been compared, with regard to similarity, to all lines $Z_k$, $Z_{k+1}$ ,..., $Z_m$ in the second text portion. In step 37 it is determined if $L_i$ is the last line of the first text portion, i.e., if i+1 > n. If not, then i is incremented, in step 42, by one, and j is reset to the value k. The process returns to step 31. It is noted that the consideration of the value k allows for comparing the new line $L_i$ only to lines in the second text portion which follow the last line match, i.e. the last found line $Z_j$ which has been determined to be similar to a previously considered line $L_i$. Thereby, the order of lines in the first and second text portion can be taken into account, and multiple line similarities can be disregarded.

If, in contrast, in step 37 it is determined that $L_i$ has been the last line in the first text portion, then the number S of found line similarity matches is divided by the number n of lines in the first text portion, and the resulting ratio is compared, in step 38, to a threshold value T. If it is seen that $\frac{S}{n} \leq T$, then it is determined, in step 39, that the first text portion is to be considered as included, possibly in an amended form, in the second text portion, otherwise, in step 40, that it is not.

Other conditions are conceivable, such as replacing $\frac{S}{n}$ by $\frac{S}{m}$, or by $\frac{S}{n+m}$ and proceeding to step 40 when the latter ratio is larger than T, and going on at step 39 otherwise. In these settings, the line number of the second text portion would be taken into account.

Turning back to the case that, in step 31, it has been determined that $L_i$ and $Z_j$ are to be considered as similar, after incrementing the counter S in step 32, it is determined, in step 33, if the most recently considered $L_i$ is the last line in the first text portion, i.e., if i+1>n. If so, the process goes on with the evaluation step 38. Otherwise, in step 34, it is determined if the most recently considered line $Z_j$ is the last line in the second text portion. If so, no further comparisons are to be made, and the process continues at the evaluation step 38. Otherwise, in step 35, i, j and k are each incremented by one, and the next pair of lines in the first and second text portion, respectively, is compared in step 31.

As noted above, according to the process depicted in Figure 3, a new line $L_i$ is compared only to lines in the second text portion which (in the order given by the indices) follow the lastly found line that was determined to be similar to a previously considered line in the first text portion. This allows a reduction of computations to be carried out. On the other hand, if two lines of the first text portion both appear in the second text portion, but in reversed order, the above process would identify only one of the line similarities. An alternative process may, therefore, be devised to compare each line $L_i$ of the first text portion to each line of the second text portion, or to each of those lines in the second text portion which so far have not been found to be similar to any previously considered line in the first text portion.

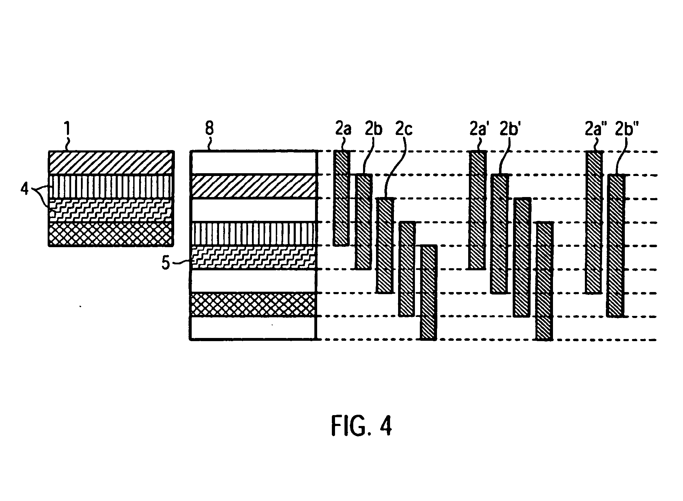

Figure 4 sketches, in a simplified form, a first text portion 4 and a third text portion 8. The first text portion includes four lines 4. By a related pattern, respective similar lines are indicated in the third text portion. The vertical blocks indicate selections of lines in the third text portion 8 as second text portions. That is, the respective second text portions are meant to respectively comprise those lines in the third text portion whose indicated extensions to the right side of the drawing are touched by the vertical blocks. It may be then first determined whether or not the first text portion is included, in an amended or unamended form, in the second text portion 2a. As can be seen, the ratio of similar lines to the number of lines in the first text portion would be $\frac{2}{4}$, which (assuming the preselected threshold to be 1 or $\frac{4}{5}$, for instance) is too small for approving an inclusion (or similarity). A new second text portion 2b may be then chosen. In this case, the above ratio would result to be $\frac{3}{4}$, thus still not big enough for considering the first text portion as included in the second text portion 2b. One might continue to slide down the search window, i.e., the blocks of four lines considered as second text portion, but said ratio would never reach the threshold 1. One may next consider a new second text portion 2a' providing of five lines, calculate the corresponding ratio and slide down the window when defining a new second text portion (such as 2b') if the ratio is too small. In the depicted exemplary situation, the new second text portion represented by block 2b" would finally yield the ratio 1.

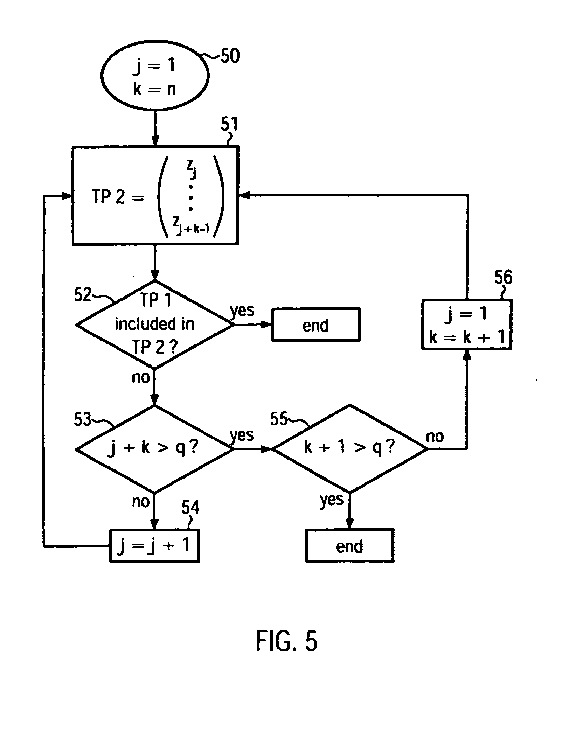

Figure 5 illustrates a process implementing the sliding process. Therein, the third text portion is assumed to consist of the q lines $T_1$, $T_2$ ,..., Tq. The line number of first text portion TP1 is considered to be n, wherein n is further assumed to be smaller than q. At step 50, integers j and k are initialised to be 1 and n, respectively. A second text portion TP2 is then defined, at step 51, to consist of a subportion of the third text portion, the subportion given by the k lines $Z_j$, $Z_{j+1}$ $Z_{j+k-1}$. Next, at step 52, a determination is made whether the first text portion is to be considered as included (possibly in an amended form) in the second text portion. If so, the process ends, otherwise a determination is made, at step 53, whether the last line of the recently considered second text portion is the last line of the third text portion, i.e. if j+k>q. If so, it is checked, at step 55, if a new block having more lines can be chosen as a new second text portion within the third text portion. To this end, it is determined if k+1>q. If so, the lastly considered second text portion (having k lines) has already been all of the third text portion, and the process ends. Otherwise, k is incremented by one, at step 56, and j is reset to be 1. The process continues at step 51 defining a new second text portion TP2.

## Claims

1. Method executed by a computer for automatically determining whether or not a first text portion (1) is to be considered as included in a second text portion (2), wherein it may be included in an unamended or amended form, both text portions being electronically coded and being structured in a respective number of one or more lines (4; 5),
   the method **characterised by** the steps of
   selecting a line $L_i$ in the first text portion and a line $Z_j$ in the second text portion, the line $L_i$ including at least one, two, three or more word/s (3) and the line $Z_j$ including at least one, two, three or more word/s;
   applying a modified Levenshtein algorithm to the tuple consisting of the lines $L_i$ and $Z_j$, the Levenshtein algorithm comparing each word in the line $L_i$ with one or some or each word/s in the line $Z_j$ to determine whether or not the compared words are equal, and calculating, by utilising whether or not the compared words are equal, at least one result value; and
   determining, by utilising the at least one result value, whether or not the first text portion is to be considered as included in the second text portion; and
   if the line $L_i$ is considered as included in line $Z_j$ comparing the line following $L_i$ in the first text portion only to lines following the line $Z_j$ in the second text portion.

2. Method of claim 1, wherein determining whether or not the first text portion is to be considered as included in the second text portion includes the step of determining (31) if the line $L_i$ is to be considered as similar to the line $Z_j$, which includes comparing (23) the at least one result value to a threshold value and determining whether or not

the lines $L_i$ and $Z_j$ are to be considered as similar based on the comparison result,
wherein the method preferably further includes the step of receiving a selection of the threshold value.

3. Method of claim 2, wherein the second text portion includes various lines, and the method further includes the steps of
   selecting, in case the line $L_i$ is not to be considered as similar to line $Z_i$, a line $Z_k$ different from $Z_j$ and included in the second text portion, the line $Z_k$ comprising at least one, two, three or more word/s,
   and applying the predetermined algorithm to the tuple consisting of the line $L_i$ and the line $Z_k$, the algorithm comparing each word in the line $L_l$ with one or some or each word/s in the line $Z_k$ to determine whether or not the compared words are equal, and calculating, by utilising whether or not the compared words are equal, at least one further result value,
   and wherein the determining whether or not the first text portion is to be considered as included in the second text portion is further based on the at least one further result value.

4. Method of claims 2 or 3, wherein the first text portion and the second text portion both include various lines, and the method further includes the steps of selecting, in case the line $L_i$ is to be considered as similar to line $Z_j$, a line $L_p$ included in the first text portion and different from $L_i$, and a line $Z_k$ included in the second text portion and different from $Z_j$, the lines $L_p$ and $Z_k$ each comprising at least one, two, three or more word/s, and
   applying the predetermined algorithm to the tuple consisting of the line $L_p$ and the line $Z_k$, the algorithm comparing each word in the line $L_p$ with one or some or each word/s in the line $Z_k$ to determine whether or not the compared words are equal, and the algorithm calculating, by utilising whether or not the compared words are equal, at least one additional result value, and
   wherein the determining whether or not the first text portion is to be considered as included in the second text portion is further based on the at least one additional result value.

5. Method of one of claims 2 to 4,
   wherein the method further comprises
   determining the number S of lines in the first text portion which are to be considered as similar to a respective line of the second text portion, and
   calculating the ratio r of: the number S divided by one of
   the total number of lines of the first text portion, or
   the total number of lines of the second text portion, or
   the sum of the total number of lines in the first text portion and the total number of lines in the second text portion; and

wherein determining whether or not the first text portion is to be considered as included in the second text portion includes comparing (38) the ratio r with a threshold value, and

wherein the method preferably further comprises the step of receiving a selection of the threshold value.

6. The method of one of claims 1 to 5, wherein the second text portion consists of a set of one, two, three or more lines included in a third text portion (8), the method further comprising the steps of

selecting, if the first text portion is determined as not to be considered as included in the second text portion (2a; 2b; 2c), a new second text portion (2a'; 2b'; 2a"; 2b") being another set of one or more lines included in the third text portion, and

determining, by applying the method of one of claims 1 to 5 to the first and the new second text portion, whether or not the first text portion is to be considered as included in the new second text portion.

7. The method of claim 6, wherein the number of lines of the second text portion equals the number of lines of the first text portion, and the new second text portion

has the same number of lines as the second text portion

or has at least one more line than the second text portion.

8. The method of one of claims 1 to 7, further comprising applying an identification, such as by highlighting in a representation on a screen, to the first text portion and the second text portion, if the first text portion is determined to be included in the second text portion,

or, when the method includes the feature of claim 2, if one or more lines in the first text portion are determined to be similar to respective one or more lines of the second text portion, applying an identification to the one or more lines in each of the first and the second text portion, such as by highlighting them in a representation on a screen.

9. The method of one of claims 1 to 8, wherein the first text portion is a part of a first electronic document (6) and the second text portion is a part a second electronic document (7),

wherein the first and the second electronic document preferably both are a respective modified version of the same original electronic document, such as a software source code document.

10. The method of claim 9, wherein

the first and the second text portions are determined, by a difference calculation algorithm applied to the first and the second electronic document, as difference regions of the electronic documents,

or, when the feature of claim 6 is included, wherein the first and the third text portions are determined, by a difference calculation algorithm applied to the first and the second electronic document, as difference regions of the electronic documents.

11. Method for detecting a code move operation in an editing or merging process involving modified versions A and B of a same base document, the method including the steps of

applying a difference calculation algorithm to the versions A and B, to determine difference regions in these versions,

choosing one difference region in each of the versions A and B,

using a chosen difference region in one version as a first text portion and a chosen difference region in the other version as the second text portion when applying one of the methods of claims 1 to 10;

or using the chosen difference region in one version as a first text portion, the chosen difference region in the other version as the third text portion and a selected portion of the third portion as the second text portion when applying one of the methods of claims 6 to 10 including the feature of claim 6.

12. The method of claim 11, further comprising determining the line number of each of the chosen difference regions,

determining that a first one of the chosen difference regions has a line number smaller than or equal to the line number of the other chosen difference region, and

considering the first chosen difference region as the first text portion.

13. The method of one of claims 11 or 12, further comprising

determining that a difference region includes at least a predetermined minimal line number,

the method preferably further including receiving the selection of the minimal line number.

14. Computer readable medium having stored thereon instructions which perform, when executed on a computer, one or more of the methods of claims 1 to 13.

**Patentansprüche**

1. Von einem Computer ausgeführtes Verfahren zur automatischen Bestimmung ob ein erster Textabschnitt (1) als in einem zweiten Textabschnitt (2) enthalten gilt, wobei er in nicht geänderter oder geänderter Form enthalten sein kann, und beide Textabschnitte elektronisch kodiert sind und in einer entsprechenden Anzahl von Zeilen (4; 5) angeordnet sind;

das Verfahren charakterisiert durch die Schritte

Auswählen einer Zeile $L_i$ in dem ersten Textabschnitt und einer Zeile $Z_j$ in dem zweiten Textabschnitt, wobei die Zeile $L_i$ wenigstens ein, zwei, drei oder mehr Wort/Wörter (3) umfasst und die Zeile $Z_j$ wenigstens ein, zwei, drei oder mehr Wort/Wörter umfasst;

Anwenden eines modifizierten Levenshtein Algorithmus auf das Tupel das aus den Zeilen $L_i$ und $Z_j$ besteht, wobei der Levenshtein Algorithmus jedes Wort der Zeile $L_i$ mit einem oder einigen oder jedem Wort/Wörter in der Zeile $Z_j$ vergleicht um zu bestimmen ob die verglichenen Wörter gleich sind oder nicht und Berechnen, durch Ausnutzen dass die verglichenen Wörter gleich sind oder sind, wenigstens eines Ergebniswerts; und

Bestimmen, durch Ausnutzung des wenigstens eines Ergebniswerts, ob der erste Textabschnitt als im zweiten Textabschnitt enthalten angesehen wird oder nicht; und

wenn die Zeile $L_i$ als in Zeile der $Z_j$ enthalten gilt, Vergleichen der Zeile die der Zeile $L_i$ im ersten Textabschnitt folgt nur mit Zeilen die der Zeile $Z_j$ im zweiten Textabschnitt folgen.

2. Verfahren nach Anspruch 1, wobei das Bestimmen ob der erste Textabschnitt als im zweiten Textabschnitt enthalten gilt den Schritt

Bestimmen (31) ob die Zeile $L_i$ als der Zeile $Z_j$ gleichend gilt umfasst, was Vergleichen (23) des wenigstens einen Ergebniswerts mit einem Schwellenwert und Bestimmen ob die Zeilen $L_i$ und $Z_j$ basierend auf dem Vergleichswert als sich gleichend gelten umfasst,

wobei das Verfahren vorzugsweise weiterhin den Schritt Empfangens einer Wahl des Schwellenwertes umfasst.

3. Verfahren nach Anspruch 2, wobei der zweite Textabschnitt viele Zeilen umfasst und das Verfahren umfassend weiterhin die Schritte

Wählen, im Fall dass die Zeile $L_i$ als der Zeile $Z_j$ nicht gleichend angesehen wird, eine Zeile $Z_k$ die verschieden von der Zeile $Z_j$ ist und im zweiten Textabschnitt enthalten ist, Zeile $Z_k$ umfassend wenigstens ein, zwei, drei oder mehr Wort/Wörter,

und Anwenden des vorbestimmten Algorithmus auf das Tupel das aus der Zeile $L_i$ und der Zeile $Z_k$ besteht, wobei der Algorithmus jedes Wort der Zeile $L_i$ mit einem oder einigen oder allen Wort/Wörtern der Zeile $Z_k$ vergleicht um zu bestimmen ob die verglichenen Wörter gleich sind oder nicht und Berechnen, durch Ausnutzen ob die verglichenen Wörter gleich sind oder nicht, wenigstens einen weiteren Ergebniswert, und

wobei das Bestimmen ob der erste Textabschnitt als im zweiten Textabschnitt enthalten angesehen wird oder nicht weiterhin auf diesem weiteren Ergebniswert basiert.

4. Verfahren nach Anspruch 2 oder 3, wobei der erste Textabschnitt und der zweite Textabschnitt viele Zeilen umfassen und das Verfahren umfassend weiterhin die Schritte

Wählen, im Fall dass die Zeile $L_i$ als der Zeile $Z_j$ gleichend angesehen wird, eine Zeile $L_p$ die im ersten Textabschnitt enthalten und von der Zeile $L_i$ verschieden ist und einer Zeile $Z_k$ die im zweiten Textabschnitt enthalten und von der Zeile $Z_j$ verscheiden ist, die Zeilen $L_p$ und $Z_k$ jeweils umfassend ein, zwei, drei oder mehr Wort/Wörter, und

Anwenden des vorbestimmten Algorithmus auf das Tupel das aus der Zeile $L_p$ und der Zeile $Z_k$ besteht, wobei der Algorithmus jedes Wort der Zeile $L_p$ mit einem oder einigen oder allen Wort/Wörtern der Zeile $Z_k$ vergleicht um zu bestimmen ob die verglichenen Wörter gleich sind oder nicht, und der Algorithmus berechnet, durch Ausnutzung ob die verglichenen Wörter gleich sind der nicht, wenigstens einen zusätzlichen Ergebniswert, und

wobei das Bestimmen ob der erste Textabschnitt im zweiten Textabschnitt als enthalten angesehen wird oder nicht weiterhin auf dem wenigstens einen zusätzlichen Ergebniswert basiert.

5. Verfahren nach einem der Ansprüche 2 bis 4, wobei das Verfahren weiterhin umfasst

Bestimmen einer Anzahl S von Zeilen des ersten Textabschnitts die als einer entsprechenden Zeile im zweiten Textabschnitt gleichend angesehen werden, und

Berechnen eines Verhältnisses r von: der Anzahl S geteilt durch eines von der gesamten Anzahl Zeilen des ersten Textabschnitts, oder

der gesamten Anzahl Zeilen des zweiten Textabschnitts, oder

der Summe der gesamten Anzahl Zeilen des ersten Textabschnitts und der gesamten Anzahl Zeilen des zweiten Textabschnitts; und

wobei Bestimmen ob der erste Textabschnitt als im zweiten Textabschnitt enthalten angesehen wird, umfasst Vergleichen des Verhältnisses r mit einem Schwellenwert, und

wobei das Verfahren vorzugweise weiterhin den Schritt Empfangen einer Wahl des Schwellenwertes umfasst.

6. Das Verfahren nach einem der Ansprüche 1 bis 5, wobei der zweite Textabschnitt aus einem Satz von einer, zwei, drei oder mehr in einem dritten Textabschnitt (8) enthaltenen Zeilen besteht, das Verfahren umfassend weiterhin die Schritte

Wählen, wenn der erste Textabschnitt als im zweiten Textabschnitt (2a;2b;2c) nicht enthalten angesehen wird, eines neuen zweiten Textabschnitts (2a';2b'; 2a";2b") der ein Satz von einer oder mehreren im dritten Textabschnitt enthaltenen Zeilen ist, und Bestimmen, durch Anwenden des Verfahrens nach einem der Ansprüche 1 bis 5 auf den ersten und neuen zweiten Textabschnitt, ob der erste Textabschnitt als im neuen zweiten Textabschnitt enthalten angesehen wird.

7. das Verfahren nach Anspruch 6, wobei die Anzahl der Zeilen des zweiten Textabschnitts der Anzahl der Zeilen des ersten Textabschnitts gleicht und der neue zweite Textabschnitt
die selbe Anzahl von Zeilen wie der zweite Textabschnitt aufweist
oder wenigstens eine Zeile mehr als der zweite Textabschnitt aufweist.

8. Das Verfahren nach einem der Ansprüche 1 bis 7, weiterhin umfassend Anwenden einer Identifikation, wie Hervorheben in einer Repräsentation auf einem Bildschirm, auf den ersten Textabschnitt und den zweiten Textabschnitt, wenn der erste Textabschnitt als im zweiten Textabschnitt enthalten angesehen wird, oder, wenn das Verfahren das Merkmal von Anspruch 2 umfasst, wenn eine oder mehr Zeilen im ersten Textabschnitt als entsprechenden einer oder mehreren Zeilen im zweiten Textabschnitt gleichend angesehen werden, Anwenden einer Identifikation auf die eine oder mehrere Zeilen in jedem von dem ersten und zweiten Textabschnitt, wie beispielsweise durch Hervorheben in einer Repräsentation auf einem Bildschirm.

9. Das Verfahren nach einem der Ansprüche 1 bis 8, wobei der erste Textabschnitt teil eines ersten elektronischen Dokuments (6) ist und der zweite Textabschnitt Teil eines zweiten elektronischen Dokuments (7) ist,
wobei das erste und zweite elektronische Dokument vorzugweise entsprechende modifizierte Versionen des selben originalen elektronischen Dokuments sind, wie eines Software-Programm-Code-Dokuments.

10. Das Verfahren nach Anspruch 9, wobei der erste und zweite Textabschnitt durch einen Unterschied-Berechnungs-Algorithmus der auf das erste und zweite elektronische Dokument angewendet wird, als Unterschied-Regionen der elektronischen Dokumente bestimmt werden,
oder, wenn das Merkmal nach Anspruch 6 enthalten ist, wobei der erste und dritte Textabschnitt durch Anwenden eines Unterschied-Berechnungs-Algorithmus der auf das erste und zweite elektronische Dokument angewendet wird, als Unterschied-Regionen der elektronischen Dokumente bestimmt werden.

11. Verfahren zur Bestimmung einer Code-Verschiebungs-Operation in einem Bearbeitungs - oder Verschmelzungsprozess einschließend modifizierte Versionen A und B des selben Basis-Dokuments, das Verfahren umfassend die Schritte
Anwenden eines Unterschied-Berechnungs-Algorithmus auf die Versionen A und B um Unterschied-Regionen in diesen Versionen zu bestimmen,
Auswählen einer Unterschied-Region in jeder der Versionen A und B,
Benutzen einer ausgewählten Unterschied-Region in einer Version als einen ersten Textabschnitt und einer ausgewählten Unterschied-Region in der anderen Version als den zweiten Textabschnitt wenn eines der Verfahren nach Anspruch 1 bis 10 angewendet wird;
oder Benutzen der ausgewählten Unterschied-Regionen in einer Version als ersten Textabschnitt, die ausgewählte Unterschied-Region in der anderen Version als den dritten Textabschnitt und eines gewählten Abschnitts des dritten Abschnitts as den zweiten Textabschnitt wenn eines der Verfahren der Ansprüche 6 bis 10 einschließlich des Merkmals des Anspruchs 6 angewendet wird.

12. Das Verfahren nach Anspruch 11, weiterhin umfassend
Bestimmen der Zeilen-Anzahl von jeder der ausgewählten Unterschied-Regionen,
Bestimmen dass eine erste von den ausgewählten Unterschied-Regionen eine Zeilen-Anzahl aufweist die kleiner oder gleich der Zeilen-Anzahl der anderen ausgewählten Unterschied-Region ist, und
Ansehen der ersten ausgewählten Unterschied-Region als den ersten Textabschnitt.

13. Das Verfahren nach Anspruch 11 oder 12, weiterhin umfassend
Bestimmen dass eine Unterschied-Region wenigstens eine vorbestimmte mindest Zeilen-Anzahl umfasst,
das Verfahren bevorzugt weiterhin umfassend Empfangen der Wahl der mindest Zeilen-Anzahl.

14. Durch einen Computer lesbares Medium mit darauf gespeicherten Instruktionen die, wenn sie auf einem Computer ausgeführt werden, ein oder mehrere Verfahren der Ansprüche 1 bis 13 ausführen.

**Revendications**

1. Procédé exécuté par un ordinateur pour déterminer automatiquement si une première partie de texte (1) doit ou non être considérée comme étant comprise dans une deuxième partie de texte (2), dans lequel ladite première partie de texte peut être comprise sous une forme modifiée ou non modifiée, les deux parties de texte étant codées électroniquement et étant structurées selon un nombre d'une ou plusieurs ligne(s) (4 ; 5) respective(s),

procédé **caractérisé par** les étapes

de sélection d'une ligne $L_i$ dans la première partie de texte et d'une ligne $Z_j$ dans la deuxième partie de texte, la ligne $L_i$ comprenant au moins un, deux, trois ou plus de trois mots et la ligne $Z_j$ comprenant au moins un, deux, trois ou plus de trois mots ;

d'application d'un algorithme de Levenshtein modifié au tuple constitué des lignes $L_i$ et $Z_j$, l'algorithme de Levenshtein comparant chaque mot contenu dans la ligne $L_i$ à un mot, certains mots ou chaque mot de la ligne $Z_j$ afin de déterminer si les mots comparés sont ou non égaux, et calculant, par utilisation si les mots comparés sont ou non égaux, d'au moins une valeur de résultat ; et

de détermination, par utilisation de la ou des valeur(s) de résultat, si la première partie de texte doit ou non être considérée comme étant comprise dans la deuxième partie de texte ; et

si la ligne $L_i$ est considérée comme étant comprise dans la ligne $Z_j$, de comparaison de la ligne $L_i$ suivante dans la première partie de texte uniquement aux lignes qui suivent la ligne $Z_j$ dans la deuxième partie de texte.

2.  Procédé conformément à la revendication 1, dans lequel la détermination si la première partie de texte doit ou non être considérée comme étant comprise dans la deuxième partie de texte comprend les étapes

de détermination (31) si la ligne $L_i$ doit être considérée comme étant similaire à la ligne $Z_j$, comprenant la comparaison (23) de la ou des valeur(s) de résultat à une valeur de seuil et la détermination si les lignes $L_i$ et $Z_j$ doivent ou non être considérées comme étant similaires à partir du résultat de comparaison.

dans lequel le procédé comprend en outre de préférence l'étape de réception d'une sélection de la valeur de seuil.

3.  Procédé conformément à la revendication 2, dans lequel la deuxième partie de texte comprend diverses lignes, et le procédé comprend en outre les étapes

de sélection, dans le cas où la ligne $L_i$ ne doit pas être considérée comme étant similaire à la ligne $Z_j$, d'une ligne $Z_k$ différente de la ligne $Z_j$ et comprise dans la deuxième partie de texte, la ligne $Z_k$ comprenant au moins un, deux, trois ou plus de trois mots,

et d'application de l'algorithme prédéfini au tuple constitué de la ligne $L_i$ et de la ligne $Z_k$, l'algorithme comparant chaque mot contenu dans la ligne $L_i$ à un mot, certains mots ou chaque mot de la ligne $Z_k$, afin de déterminer si les mots comparés sont ou non égaux, et calculant, par utilisation si les mots comparés sont ou non égaux, d'au moins une première autre valeur de résultat, et

dans lequel la détermination si la première partie de texte doit ou non être considérée comme étant comprise dans la deuxième partie de texte est en outre fondée sur la ou les autres valeur(s) de résultat.

4.  Procédé conformément aux revendications 2 ou 3, dans lequel la première partie de texte et la deuxième partie de texte comprennent diverses lignes, et le procédé comprend en outre les étapes

de sélection, dans le cas où la ligne $L_i$ doit être considérée comme étant similaire à la ligne $Z_j$, d'une ligne $L_p$ comprise dans la première partie de texte et différente de la ligne $L_i$, et d'une ligne $Z_k$ comprise dans la deuxième partie de texte et différente de la ligne $Z_j$, les lignes $L_p$ et $Z_k$ comprenant chacune au moins un, deux, trois ou plus de trois mots, et d'application de l'algorithme prédéfini au tuple constitué de la ligne $L_p$ et de la line $Z_k$, l'algorithme comparant chaque mot contenu dans la ligne $L_p$ à un mot, certains mots ou chaque mot de la ligne $Z_k$ afin de déterminer si les mots comparés sont ou non égaux, et l'algorithme calculant, par utilisation si les mots comparés sont ou non égaux, au moins une valeur de résultat additionnelle, et

dans lequel la détermination si la première partie de texte doit ou non être considérée comme étant comprise dans la deuxième partie de texte est en outre fondée sur la ou les valeur(s) de résultat additionnelle(s).

5.  Procédé conformément à l'une de la revendication 2 à 4,

dans lequel le procédé comprend en outre

la détermination du nombre S de lignes contenues dans la première partie de texte qui doivent être considérées comme étant similaires à une ligne respective de la deuxième partie de texte, et

de calcul du rapport r : du nombre S divisé par le nombre total de lignes de la deuxième partie de texte et/ou

le nombre total de lignes de la deuxième partie de texte et/ou

la somme du nombre total de lignes contenues dans la première partie de texte et du nombre total de lignes contenues dans la deuxième partie de texte ; et

dans lequel la détermination si la première partie de texte doit ou non être considérée comme étant comprise dans la deuxième partie de texte comprend la comparaison (38) du rapport r à une valeur de seuil, et

dans lequel le procédé comprend en outre de préférence l'étape de réception d'une sélection de la valeur de seuil.

6.  Procédé conformément à l'une des revendications 1 à 5, dans lequel la deuxième partie de texte comprend un ensemble d'une, de deux, de trois ou de plus de trois lignes comprises dans une troisième partie de texte (8), procédé comprenant en outre les étapes

de sélection, si la première partie de texte est déterminée comme ne devant pas être considérée comme étant comprise dans la deuxième partie de texte (2a ; 2b ; 2c), d'une nouvelle deuxième partie de texte (2a' ; 2b' ; 2a" ; 2b") qui est un autre ensemble d'une ligne ou plus comprises dans la troisième partie de texte, et

de détermination, par application du procédé conformément à l'une des revendications 1 à 5 à la première partie de texte et à la nouvelle deuxième partie de texte, si la première partie de texte doit ou non être considérée comme étant comprise dans la nouvelle deuxième partie de texte.

7.  Procédé conformément à la revendication 6, dans lequel le nombre de lignes de la deuxième partie de texte est égal au nombre de lignes de la première partie de texte, et la nouvelle deuxième partie de texte

comprend le même nombre de lignes que la deuxième partie de texte

ou comprend au moins une ligne de plus que la deuxième partie de texte.

8.  Procédé conformément à l'une des revendications 1 à 7, comprenant en outre l'application d'une identification, telle que la mise en évidence dans une représentation sur un écran, à la première partie de texte et à la deuxième partie de texte, si la première partie de texte est déterminée comme étant comprise dans la deuxième partie de texte, ou, lorsque le procédé comprend la caractéristique de la revendication 2, si une ou plusieurs ligne(s) contenue(s) dans la première partie de texte est/sont déterminée(s) comme étant similaire(s) à une ou plusieurs ligne(s) respective(s) contenue(s) dans la deuxième partie de texte, l'application d'une identification à la ou aux ligne(s) dans chacune des première et deuxième parties de texte, telle que leur mise en évidence dans une représentation sur un écran.

9.  Procédé conformément à l'une des revendications 1 à 8, dans lequel la première partie de texte est une partie d'un premier document électronique (6) et la deuxième partie de texte est une partie d'un second document électronique (7),

dans lequel les premier et second documents électroniques sont de préférence tous les deux une version modifiée respective du même document électronique original, tel qu'un document de code source de logiciel.

10.  Procédé conformément à la revendication 9, dans lequel

les première et deuxième parties de texte sont déterminées, par un algorithme de calcul de différence appliqué aux premier et second documents électroniques, en tant que régions de différence des documents électroniques,

ou, lorsque la caractéristique de la revendication 6 est comprise, dans lequel les première et troisième parties de texte sont déterminées, par un algorithme de calcul de différence appliqué aux premier et second documents électroniques, en tant que régions de différence des documents électroniques.

11.  Procédé pour détecter une opération de déplacement de code dans un processus d'édition ou de fusion impliquant des versions modifiées A et B du même document de base, procédé comprenant les étapes

d'application d'un algorithme de calcul de différence aux versions A et B, afin de déterminer des régions de différence dans ces versions,

de choix d'une région de différence dans chacune des versions A et B,

d'utilisation d'une région de différence choisie dans une version en tant que première partie de texte et d'une région de différence choisie dans l'autre version en tant que deuxième partie de texte lors de l'application de l'un des procédés conformément aux revendication 1 à 10 ;

ou d'utilisation de la région de différence choisie dans une version en tant que première partie de texte, de la région de différence choisie dans l'autre version en tant que troisième partie de texte et d'une partie sélectionnée de la troisième partie en tant que deuxième partie de texte lors de l'application de l'un des procédés conformément aux revendications 6 à 10 comprenant la caractéristique de la revendication 6.

12.  Procédé conformément à la revendication 11 comprenant en outre

la détermination du nombre de lignes de chacune des régions de différence choisies,

la détermination qu'une première région parmi les régions de différences choisies comprend un nombre de lignes inférieur ou égal au nombre de lignes de la région de différence choisie, et

la considération de la première région de différence choisie en tant que la première partie de texte.

13.  Procédé conformément à l'une des revendications 11 ou 12, comprenant en outre

la détermination qu'une région de différence comprend au moins un nombre de lignes minimal prédéfini,

le procédé comprenant en outre de préférence la réception de la sélection du nombre de lignes minimal.

**14.** Support lisible par ordinateur sur lequel sont stockées des instructions lesquelles exécutent, lorsqu'elles sont exécutées sur un ordinateur, un ou plusieurs des procédés conformément aux revendications 1 à 13.

```
1  Public class Platform
2  {
3    public static string GetPath(string)
4    {
5      return GetPath(path, false);
6    }
7    private static bool method1()
8    {
       .
       .
       .
     }
18   public static int method2(char)
19   {
       .
       .
22   }
       .
       .
       .
```

```
1  Public class Platform
2  {
3    private static bool method1()
4    {
       .
       .
     }
14   public static string GetPath(string)
     {
       return GetPath(path, true);
17     println;
18   }
19   public static int method2(char)
     {
       .
       .
23   }
```

FIG. 1

21 — determine $k_i$

22 — calculate $d_{ij}$

23 — $\dfrac{d_{ij}}{k_i} \leq t\,?$ — yes → $L_i$ similar to $Z_j$ — 24

no

25 — $L_i$ not similar to $Z_j$

## FIG. 2

FIG. 3

FIG. 4

FIG. 5

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090089754 A, ZEIDMAN